# EUROPEAN PATENT APPLICATION

(11) **EP 4 072 105 A1**
(43) Date of publication of application: **12.10.2022**
(21) Application number: 22166938.5
(22) Date of filing: 06.04.2022
(51) Int. Cl.: H04L 51/10, H04L 51/18, H04L 51/42

(54) **MULTI-LINK COMPOSITE IMAGE GENERATOR FOR ELECTRONIC MAIL (E-MAIL) MESSAGES**

(30) Priority: 06.04.2021 US 202163171490 P; 07.03.2022 US 202217688864
(71) Applicant: Zmags Corp., Boston, MA 02210 (US)
(72) Inventor: YIMOYINES, Derek J., Winchester 01890 (US); ROSSETTI, Samuel, Reading 01867 (US); CROAN, Norman, Goffstown 03045-2356 (US); VERNEREY, Allison Laure, Dorchester 02125 (US); MEHTA, Kunal, Mumbai 401107 (IN)
(74) Representative: Carpmaels & Ransford LLP

(57) **Abstract**

Aspects of the present disclosure provide systems, methods, and computer-readable storage media that support electronic mail (e-mail) messages that include image(s) having multiple distinct selectable regions configured to direct a browser to different respective links. To illustrate, a user device may obtain an image that includes multiple interactive regions and image information that is associated with the image. The image information may indicate layouts of the interactive regions and links that correspond to the interactive regions. The image may be divided into multiple sub-images based on the image information, such that the sub-images correspond to the interactive regions and, optionally, other regions. An e-mail message may be generated that includes a composite image of the multiple sub-images. The composite image may include multiple selectable regions that, upon selection at a receiving device, cause a browser to access a link associated with the selected region (e.g., the corresponding sub-image).

## Description

### CROSS-REFERENCE TO RELATED APPLICATIONS

The present application claims the benefit of priority from U.S. Provisional Application No. 63/171,490 filed April 6, 2021 and entitled "MULTI-LINK COMPOSITE IMAGE GENERATOR FOR ELECTRONIC MAIL (E-MAIL) MESSAGES," the disclosure of which is incorporated by reference herein in its entirety.

### TECHNICAL FIELD

The present subject matter is directed generally to electronic device(s) configured to support electronic mail (e-mail) messages that include an image having multiple distinct selectable regions configured to direct a browser to different respective links.

### BACKGROUND

As of the fourth quarter of 2020, there are estimated to be 4.66 billion active users of the Internet. The internet may be used for a variety of activities, such as researching information, communicating with remotely-located entities, performing retail transactions, and teleconferencing, among a myriad of other examples. Many Internet users may browse websites while using the Internet. As web design has advanced, the level of sophistication and customization of web pages has increased. It is now common for a web page to include not just text and basic images, but multiple different graphical and audio/visual elements, such as eye-pleasing layouts, computer-generated content, digital images, animations, audio, video, multimedia content, interactive content, and the like.

One popular technique used to improve customization and user experience of web pages is to include interactive elements as navigation tools to other web pages (or other documents). These interactive elements may include buttons, icons, or other graphical elements that direct a browser to a different link (e.g., to a different web page). Interactive elements may be used in combination with images to further enhance customizability and user experience. For example, an image that includes headshots of three employees of an organization may be included in a web page of the organization, and interactive regions may be defined for the areas that include the headshots. Each interactive region, when selected by a user, may cause the browser displaying the web page to access and display a respective biography web page for the employee. For example, selection of an interactive region overlaid on a president's headshot causes the browser to be directed to the president's biography page, while selection of an interactive region overlaid on a vice-president's headshot causes the browser to be directed to the vice-president's biography page. Web pages that include such "multi-linked" images may provide a better user experience than a web page that includes an image with a single interactive region associated with a single link, as the link may not provide the level of specific detail the user is expecting.

Although web design has resulted in highly customizable web pages, electronic mail (e-mail) does not offer the same level of customization. This is due, at least in part, to e-mail messages being designed using a subset of hypertext programming language (HTML) commands that is more limited than the HTML commands available to web pages, including the lack of support for other programming languages such as Javascript and the like. For this reason, e-mail messages do not include multi-link images. Instead, an image in an e-mail message provides single-link functionality. For example, an entirety of the image or a region within the image may be selectable to cause a browser to be directed to a particular link. Using the example described above, if the image including the three employee headshots is included in an e-mail message, a selectable region such as a region that includes all three headshots may be linked to a web page. The link may be a landing page that provides multiple individual links (e.g., one for each distinct biography page) in order to provide the same information. However, accessing this information by a user requires traversing multiple documents (e.g., the e-mail message and the landing page) before arriving at the desired information. Each additional link that the user is required to click to reach a destination degrades the user experience and may result in the user abandoning the e-mail message and the web page(s) entirely. Additionally, requiring accessing and loading of multiple documents via a network decreases throughput within the network. One solution is to include the selectable regions outside of the image within the e-mail message, but doing so severs the visual relationship of the selectable regions to particular content within the image due to the location of the selectable regions. Another solution is to include multiple copies of the image in the e-mail message such that each image includes one selectable region and the multiple copies are overlaid at the same location within the e-mail message. However, including multiple copies of an image in an e-mail message increases the size of the e-mail message, which degrades throughput in a network and increases the likelihood that the e-mail message may be blocked for failing to comply with a size limit enforced by a recipient. Additionally, the longer an e-mail message is, the less likely the user is to scroll to the bottom and click/convert the content, resulting in less successful website traffic to links further down in e-mail messages, decreased monetization of e-mail message content, and other drawbacks.

### SUMMARY

The present disclosure provides systems, methods, and computer-readable media that support electronic mail (e-mail) messages that include image(s) having multiple distinct selectable regions configured to direct a browser to different respective links. For example, an e-mail message may include an image having at least a first selectable region and a second selectable region, the first selectable region may be associated with a first link (e.g., a uniform resource locator (URL) or the like), and the second selectable region may be associated with a second link that is different than the first link. To illustrate, selection of the first selectable region may cause a browser to access the first link, such as to display a first web page, and selection of the second selectable region may cause the browser to access the second link, such as to display a second web page that is different than the first web page. In this manner, customization of an e-mail message may be improved by configuring an image within the e-mail message to include multiple, portion-specific (e.g., item-specific) selectable regions that are associated with different links, as compared to conventional e-mail messages that include an image with a single selectable region that can be linked to another document.

As described herein, an e-mail markup generation tool (or other tool or application) may be executed at a user device to cause the user device to obtain an image and image information associated with the image. The image may include multiple interactive regions, and the image information may include layout information associated with the multiple interactive regions and multiple links associated with the interactive regions. For example, the image may include at least a first interactive region and a second interactive region, and the image information may include a first link corresponding to the first interactive region and a second link corresponding to the second interactive region, as well as layout information associated with the interactive regions. The user device may divide the image into multiple sub-images based on the image information. For example, the user device may divide the image into multiple non-overlapping sub-images that, when combined, form the image. The number of sub-images may be greater than or equal to the number of interactive regions in the original image. Sub-images that correspond to the interactive regions (e.g., that are formed from the area of the image that includes a respective interactive region) may be associated with the same links as the respective interactive regions. After dividing the image, the user device may generate an e-mail message that includes a composite image of the multiple sub-images, and optionally other information such as text, signatures, addresses, and the like. Because multiple sub-images are associated with links, multiple selectable regions in the composite image may be selectable at a receiving device of the e-mail message to cause a browser at the receiving device to access an associated link. For example, selection of a particular selectable region of the composite image may cause the browser to access the first link, and selection of another particular selectable region of the composite image may cause the browser to access the second link. Supporting multiple selectable regions and different associated links within the composite image may enable item-specific navigation for images in e-mail messages, as further described herein. Although described as receiving a single image and dividing the image into multiple sub-images, in other implementations, the user device may receive multiple images that each include zero or one interactive regions, and the user device may generate an e-mail message that includes a composite image of the multiple images (some of which may be divided into sub-images). Additionally or alternatively, instead of receiving layout information associated with the interactive regions, the user device may identify interactive regions in received images using one or more computer vision techniques.

The systems, devices, methods, and computer-readable media described herein provide benefits as compared to conventional e-mail applications and devices. For example, an e-mail message that includes a composite image of the multiple sub-images, some of which are associated with multiple different links, improves customization and user experience of the e-mail message. To illustrate, selection of different portions of the composite image at a receiving device may cause a browser to access and display different links, which enables different objects depicted in the composite image to be customized with different links. This improved customization of the e-mail message and the composite image is achieved without requiring multiple copies of images to be included in the e-mail message, which would increase a size of the e-mail message and decrease throughput within a network, in addition to increasing a likelihood that the e-mail message is blocked for failing to comply with an e-mail size requirement. Thus, the present disclosure describes systems and techniques that enable modification of the conventional operation of e-mail communications in networks by enabling generation and transmission of e-mail messages that include multiple distinct selectable regions (associated with respective distinct links) in single images. Additionally, the present disclosure provides technical improvements to the operation of receiving devices of e-mail messages. To illustrate, because multiple sub-images of a composite image may be received (and transmitted) at least partially concurrently, a receive and display time associated with an e-mail message at a receiving device is reduced as compared to receiving an e-mail message that includes a single, non-divided image. For example, if the receiving device is able to receive each of the multiple sub-images concurrently, the receive and display time associated with the e-mail message may be based on the receive and display time associated with the largest sub-image of the multiple sub-images instead of a receive and display time associated with the entire image. Because the largest sub-image is smaller in size than the original image, the receive and display time associated with the largest sub-image is less than the receive and display time associated with the original image, and thus the receive and display time at the receiving device is reduced.

In a particular aspect, a method for generating electronic mail (e-mail) messages with multi-link composite images includes obtaining, by one or more processors, an image and image information indicating multiple interactive regions of the image that correspond to multiple links. The multiple interactive regions include a first interactive region corresponding to a first link of the multiple links and a second interactive region corresponding to a second link of the multiple links. The method also includes dividing, by the one or more processors, the image into multiple sub-images based on the image information. Each sub-image of the multiple sub-images includes a respective portion of the image. The method further includes outputting, by the one or more processors, an e-mail message that includes a composite image of the multiple sub-images. A first region of the composite image is selectable within the e-mail message to cause a browser to access the first link, and a second region of the composite image is selectable within the e-mail message to cause the browser to access the second link.

In another particular aspect, a system for generating e-mail messages with multi-link composite images includes a memory and one or more processors communicatively coupled to the memory. The one or more processors are configured to obtain an image and image information indicating multiple interactive regions of the image that correspond to multiple links. The multiple interactive regions include a first interactive region corresponding to a first link of the multiple links and a second interactive region corresponding to a second link of the multiple links. The one or more processors are also configured to divide the image into multiple sub-images based on the image information. Each sub-image of the multiple sub-images includes a respective portion of the image. The one or more processors are further configured to output an e-mail message that includes a composite image of the multiple sub-images. A first region of the composite image is selectable within the e-mail message to cause a browser to access the first link, and a second region of the composite image is selectable within the e-mail message to cause the browser to access the second link.

In another particular aspect, non-transitory computer-readable storage medium stores instructions that, when executed by a processor, cause the processor to perform operations for generating e-mail messages with multi-link composite images. The operations include obtaining an image and image information indicating multiple interactive regions of the image that correspond to multiple links. The multiple interactive regions include a first interactive region corresponding to a first link of the multiple links and a second interactive region corresponding to a second link of the multiple links. The operations also include dividing the image into multiple sub-images based on the image information. Each sub-image of the multiple sub-images includes a respective portion of the image. The operations further include outputting an e-mail message that includes a composite image of the multiple sub-images. A first region of the composite image is selectable within the e-mail message to cause a browser to access the first link, and a second region of the composite image is selectable within the e-mail message to cause the browser to access the second link.

In another particular aspect, a method for processing e-mail messages with multi-link composite images includes receiving, by one or more processors, an e-mail message that includes a composite image of a plurality of sub-images. The plurality of sub-images includes at least two sub-images that correspond to multiple links. The method also includes initiating, by the one or more processors, display of the e-mail message and the composite image. The composite image includes at least two interactive regions corresponding to the at least two sub-images. The method includes receiving, by the one or more processors, user input indicating a selected interactive region of the at least two interactive regions. The method further includes causing, by the one or more processors, a browser to access one of the multiple links that corresponds to the selected interactive region.

In another particular aspect, a system for processing e-mail messages with multi-link composite images includes a memory and one or more processors communicatively coupled to the memory. The one or more processors are configured to receive an e-mail message that includes a composite image of a plurality of sub-images. The plurality of sub-images includes at least two sub-images that correspond to multiple links. The one or more processors are also configured to initiate display of the e-mail message and the composite image. The composite image includes at least two interactive regions corresponding to the at least two sub-images. The one or more processors are configured to receive user input indicating a selected interactive region of the at least two interactive regions. The one or more processors are further configured to cause a browser to access one of the multiple links that corresponds to the selected interactive region.

In another particular aspect, non-transitory computer-readable storage medium stores instructions that, when executed by a processor, cause the processor to perform operations for processing e-mail messages with multi-link composite images. The operations include receiving an e-mail message that includes a composite image of a plurality of sub-images. The plurality of sub-images includes at least two sub-images that correspond to multiple links. The operations also include initiating display of the e-mail message and the composite image. The composite image includes at least two interactive regions corresponding to the at least two sub-images. The operations include receiving user input indicating a selected interactive region of the at least two interactive regions. The operations further include causing a browser to access one of the multiple links that corresponds to the selected interactive region.

The foregoing has outlined rather broadly the features and technical advantages of the present disclosure in order that the detailed description that follows may be better understood. Additional features and advantages will be described hereinafter which form the subject of the claims of the disclosure. It should be appreciated by those skilled in the art that the conception and specific aspects disclosed may be readily utilized as a basis for modifying or designing other structures for carrying out the same purposes of the present disclosure. It should also be realized by those skilled in the art that such equivalent constructions do not depart from the scope of the disclosure as set forth in the appended claims. The novel features which are disclosed herein, both as to organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present disclosure.

### BRIEF DESCRIPTION OF THE DRAWINGS

For a more complete understanding of the present disclosure, reference is now made to the following descriptions taken in conjunction with the accompanying drawings, in which:
FIG. 1 is a block diagram of an example of a system that supports generation of electronic mail (e-mail) messages with multi-link composite images according to one or more aspects;
FIG. 2 shows an example of an image with multiple interactive regions according to one or more aspects;
FIG. 3 shows an example of dividing the image of FIG. 2 into multiple sub-images according to one or more aspects;
FIGs. 4A-4B show examples of multiple images with multiple interactive regions and a composite image with multiple interactive regions for inclusion in an e-mail message according to one or more aspects;
FIG. 5 is a flow diagram illustrating an example of a method for generating e-mail messages with multi-link composite images according to one or more aspects; and
FIG. 6 is a flow diagram illustrating an example of a method for processing e-mail messages with multi-link composite images according to one or more aspects.

It should be understood that the drawings are not necessarily to scale and that the disclosed aspects are sometimes illustrated diagrammatically and in partial views. In certain instances, details which are not necessary for an understanding of the disclosed methods and apparatuses or which render other details difficult to perceive may have been omitted. It should be understood, of course, that this disclosure is not limited to the particular aspects illustrated herein.

### DETAILED DESCRIPTION

Aspects of the present disclosure provide systems, methods, apparatus, and computer-readable storage media that support electronic mail (e-mail) messages that include image(s) having multiple distinct selectable regions configured to direct a browser to different respective links. To generate such e-mail messages, a user device may obtain an image that includes multiple interactive regions, such as buttons, icons, text, hotspots, additional overlaid images, or the like, and image information that is associated with the image. The image information may indicate layouts of the interactive regions and links that correspond to the interactive regions. The user device may divide the image into multiple sub-images based on the image information, such that the sub-images include sub-images corresponding to the interactive regions and optionally one or more other sub-images corresponding to other regions of the image. The sub-images that correspond to the interactive regions may be associated with the links that correspond to the interactive regions. The user device may generate an e-mail message that includes a composite image of the multiple sub-images and, optionally, text or other information. Alternatively, the user device may receive multiple images, some of which include a respective interactive region, and the user device may generate an e-mail message that includes a composite image of the multiple images. The composite image may include multiple selectable regions that, upon selection at a receiving device, cause a browser to access a corresponding link. Because the composite image is based on multiple sub-images associated with multiple different links, the composite image may be a multi-link image that supports portion-specific or item-specific navigation for portions of, or items depicted in, the composite image, which may modify the conventional operation of e-mail messages to improve customization and user experience associated with e-mail messages. The techniques described herein may also decrease a receive and display time of the e-mail message at a receiving device, as compared to receiving an e-mail message with a single, non-divided image (or multiple copies of such an image).

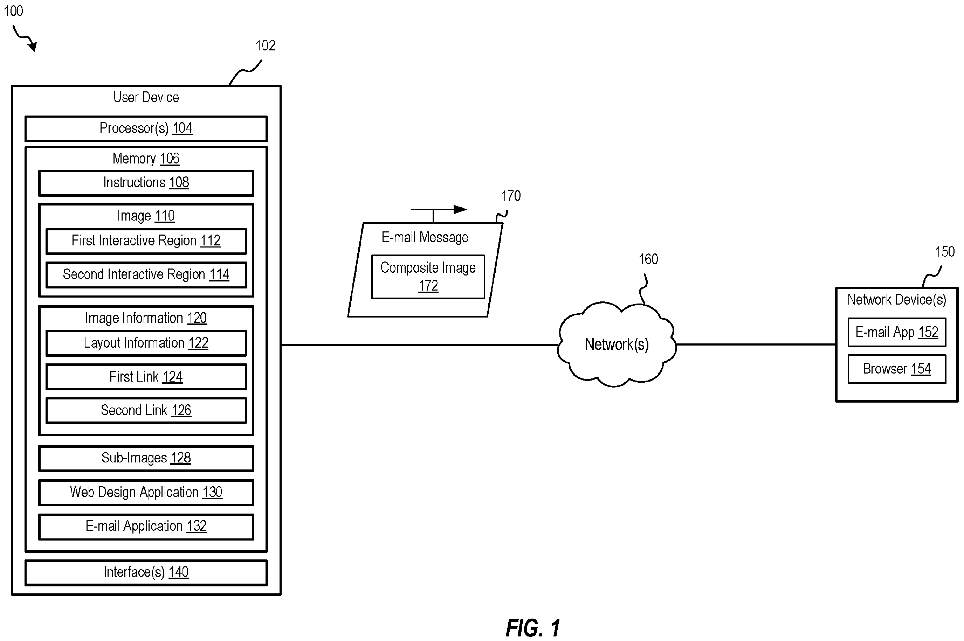

Referring to FIG. 1, an example of a system that supports generation of e-mail messages with multi-link composite images according to one or more aspects is shown as a system 100. The system 100 may be configured to generate email messages that include composite images having multiple distinct selectable portions that correspond to different links. As shown in FIG. 1, the system 100 includes a user device 102, one or more network devices 150, and one or more networks 160. In some implementations, the system 100 may include additional components, such as a server, additional user devices, or additional network devices, as a non-limiting example.

The user device 102 (e.g., a computing device) may include or correspond to a desktop computing device, a laptop computing device, a personal computing device, a tablet computing device, a mobile device (e.g., a smart phone, a tablet, a personal digital assistant (PDA), a wearable device, and the like), a server, a virtual reality (VR) device, an augmented reality (AR) device, an extended reality (XR) device, a vehicle (or a component thereof), an entertainment system, other computing devices, or a combination thereof, as non-limiting examples. The user device 102 includes one or more processors 104, a memory 106, and one or more communication interfaces 140. In some other implementations, one or more additional components may be included in the user device 102. It is noted that functionalities described with reference to the user device 102 are provided for purposes of illustration, rather than by way of limitation and that the exemplary functionalities described herein may be provided via other types of computing resource deployments. For example, in some implementations, computing resources and functionality described in connection with the user device 102 may be provided in a distributed system using multiple servers or other computing devices, or in a cloud-based system using computing resources and functionality provided by a cloud-based environment that is accessible over a network, such as the one of the one or more networks 160. To illustrate, one or more operations described herein with reference to the user device 102 may be performed by one or more servers or a cloud-based system that communicates with one or more client or user devices or the network devices 150.

The one or more processors 104 may include one or more microcontrollers, application specific integrated circuits (ASICs), field programmable gate arrays (FPGAs), central processing units (CPUs) having one or more processing cores, or other circuitry and logic configured to facilitate the operations of the user device 102 in accordance with aspects of the present disclosure. The memory 106 may include random access memory (RAM) devices, read only memory (ROM) devices, erasable programmable ROM (EPROM), electrically erasable programmable ROM (EEPROM), one or more hard disk drives (HDDs), one or more solid state drives (SSDs), flash memory devices, network accessible storage (NAS) devices, or other memory devices configured to store data in a persistent or non-persistent state. Software configured to facilitate operations and functionality of the user device 102 may be stored in the memory 106 as instructions 108 that, when executed by the one or more processors 104, cause the one or more processors 104 to perform the operations described herein with respect to the user device 102, as described in more detail below. Additionally, the memory 106 may be configured to store data and information, such as an image 110, image information 120, and multiple sub-images 128. Illustrative aspects of the image 110, the image information 120, and the sub-images 128 are described in more detail below. The memory 106 may also be configured to store (or the instructions 108 may include or correspond to) a web design application 130 and an e-mail application 132. The web design application 130 may support user creation and modification of a website or other web design. The e-mail application 132 may support generation of, communication of, processing, and display of e-mail messages. In some implementations, the web design application 130 is a proprietary web creator application, and the e-mail application 132 is a separate e-mail application (e.g., a 3rd party application) that performs e-mail operations. Further details of the web design application 130 and the e-mail application 132 are described below.

The one or more communication interfaces 140 may be configured to communicatively couple the user device 102 to the one or more networks 160 via wired or wireless communication links established according to one or more communication protocols or standards (e.g., an Ethernet protocol, a transmission control protocol/internet protocol (TCP/IP), an Institute of Electrical and Electronics Engineers (IEEE) 802.11 protocol, an IEEE 802.16 protocol, a 3rd Generation (3G) communication standard, a 4th Generation (4G)/long term evolution (LTE) communication standard, a 5th Generation (5G) communication standard, and the like). In some implementations, the user device 102 includes one or more input/output (I/O) devices that include one or more display devices, a keyboard, a stylus, one or more touchscreens, a mouse, a trackpad, a microphone, a camera, one or more speakers, haptic feedback devices, or other types of devices that enable a user to receive information from or provide information to the user device 102. In some implementations, the user device 102 is coupled to the display device , such as a monitor, a display (e.g., a liquid crystal display (LCD) or the like), a touch screen, a projector, a VR display, an AR display, an XR display, or the like. In some other implementations, the display device is included in or integrated in the user device 102.

The network devices 150 may include one or more computing devices or other electronic devices that are communicatively coupled to the user device 102 via the one or more networks 160. For example, the network devices 150 may include or correspond to desktop computing devices, laptop computing devices, personal computing devices, tablet computing devices, mobile devices (e.g., smart phones, tablets, PDAs, wearable devices, and the like), servers, VR devices, AR devices, XR devices, vehicles (or components thereof), entertainment systems, other computing devices, or a combination thereof, as non-limiting examples. The network devices 150 may include respective processors, memories, and communication interfaces, as described with reference to the user device 102. In some implementations, the memories of the network devices 150 may store an e-mail application 152 and a browser 154. The e-mail application 152 may support generation of, communication of, processing, and display of e-mail messages. The browser 154 may include an internet browser or other application that supports access to the Internet or other network links. Further details of the e-mail application 152 and the browser 154 are described below.

During operation of the system 100, the user device 102 may obtain the image 110 and the image information 120 that is associated with the image 110. The image 110 may include a digital image captured by a camera, a computer-generated image, a frame of video, any other type of image, or a combination thereof. In some implementations, the image 110 is generated by the web design application 130, and the image 110 may be a combination of one or more input images, one or more visual elements, one or more interactive regions, or the like, as further described below. The image 110 includes multiple interactive regions, such as a first interactive region 112 and a second interactive region 114. The interactive regions 112-114 may include, or be indicated by, user selectable and interactive elements such as buttons, icons, shapes, logos, text (or bounding boxes surrounding text), "hotspots," additional images overlaid on the image 110, or a combination thereof. As used herein, a hotspot refers to any area defined in a webpage or image that enables redirection to another webpage or file. The hotspot may be visually indicated (e.g., via inclusion of a visual element such as an icon, shape, etc.) or may not be visually indicated (e.g., the area of the image is not modified or overlaid with any other element). The interactive regions 112-114 may be clickable to cause performance of an action by a device that displays the image 110, such as causing a browser to load a webpage or other file indicated by links associated with interactive regions 112-114. For example, clicking on the first interactive region 112 (or otherwise selecting the first interactive region 112) may cause a browser to access a webpage linked to the first interactive region 112, as further described below. Although two hotspots are described, in other examples, the image 110 may include more than two interactive regions.

In addition to the above-described clickable interactive elements, in some aspects the interactive elements may include other types of interactive functionality not typically available for creating interactive content in e-mails, such as mouse-over effects. To illustrate, an image (or sub-image) of an interactive region may be made at least partially transparent (e.g., from 0% transparent to 100% transparent or any range in between) when the user places the mouse cursor over the interactive region. As another example, the interactive region may be configured to swap a sub-image corresponding to the interactive region with another image when the user places the mouse cursor over the interactive region. For example, suppose that a composite image depicts a scene that includes a table surrounded by several chairs and an interactive region is defined for one of the chairs. When the user places the cursor over that interactive region, the sub-image corresponding to that interactive region may be replaced or swapped with an image depicting only the chair. This capability may provide the user with an enhanced ability to view the chair directly from the e-mail, rather than relying on the composite image in which the chair may be at least partially obscured due to presence of the table, the other chairs, and/or other elements depicted in the scene of the composite image. It is noted that the exemplary clickable and non-clickable interactive regions and effects described above have been provided for purposes of illustration, rather than by way of limitation and that other types of interactive regions and effects may be created in accordance with aspects of the present disclosure.

The image information 120 includes layout information 122 and multiple links that correspond to the interactive regions included in the image 110, such as a first link 124 and a second link 126. The layout information 122 may include a respective location, respective dimensions, other layout-related information, or the like, for one or more of the interactive regions in the image 110. As a non-limiting example, the layout information 122 includes a location and dimensions of the first interactive region 112 and a location and dimensions of the second interactive region 114, in addition to a location and dimensions of any other interactive regions (if the image 110 includes more than two interactive regions). The location may include coordinates, or other information, that indicate a particular point within the respective interactive region, such as a particular vertex (e.g., an upper-left vertex) of the interactive region or a bounding box around the interactive regions, a center of interactive region or the bounding box, or the like. The coordinates may be with reference to a two-dimensional (2D) coordinate system defined for the image 110 (e.g., an x-y coordinate system). Alternatively, the location may indicate multiple coordinates, such as coordinates of multiple vertices of the interactive region or the bounding box. The dimensions may include width and height of the interactive region or the bounding box, as a non-limiting example. Although 2D images are described herein, in other implementations, the techniques of the present application may be applied to three-dimensional (3D) images (e.g., the coordinates system may be an x-y-z coordinate system and the dimensions may include width, height, and length/depth). The links included in the image information 120 may include uniform resource locators (URLs) or other forms of links that may be used to direct a browser to webpages, documents, other click-destinations, or the like. For example, the first link 124 may include a URL of a first webpage and the second link 126 may include a URL of a second webpage. As a non-limiting example, the first interactive region 112 may correspond to a first product depicted in the image 110, the second interactive region 114 may correspond to a second product depicted in the image 110, the first link 124 may include a website related to the first product, and the second link 126 may include a website related to the second product.

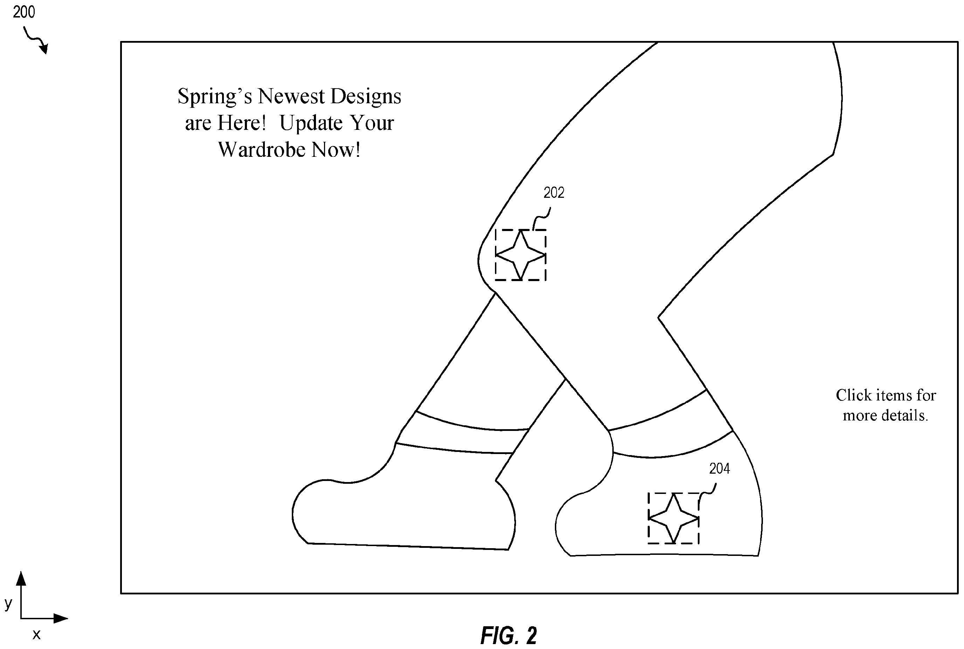

In some implementations, the image 110 and the image information 120 may be generated as output of the web design application 130. For example, the user device 102 may execute the web design application 130 to enable a user to create or design a webpage or other digital design content, and the image 110 and the image information 120 may be some of the outputs of the web design application 130. In some implementations, the web design application 130 is a web design creator application that enables a user to add interactive regions to images or other design elements using inputs, I/O devices, and the like, as well as text, graphics, and other elements, some of which may be included in different layers. The user may also input the links to be associated with the interactive regions. Once the design is finalized, the web design application 130 may combine the layers and the elements into a single image (e.g., the image 110) and the image information 120. For example, the user may use the web design application 130 to create a digital experience (e.g., a combination of one or more images, text, visual elements, interactive content, multimedia content, and the like) that may include one or more of the user's images as input, and the web design application 130 may merge all the components of the design into a single image (e.g., the image 110) that includes static representations of all the components as well as information (e.g., the image information 120) that indicates the locations, dimensions, links, and other relevant information associated with the single image. This single image may be generated by the web design application 130 based on user input (e.g., selection of a "compose e-mail" button) and be used in generating a multi-link composite image for inclusion in an e-mail generated by the e-mail application 132. Details of the web design application 130, the image 110, and the interactive regions 112-114 are further described herein with reference to FIG. 2. Alternatively, the user device 102 may receive the image 110 and the image information 120 from another device (e.g., a device or system that executes another instance of the web design application 130), via user input (e.g., the user device 102 may present a GUI that enables the user to enter parameters of interactive regions within a user-selected image), or the like. Alternatively, the user device 102 may receive the image 110 without any image information, and the user device 102 may perform one or more computer vision operations to identify interactive regions, as further described herein.

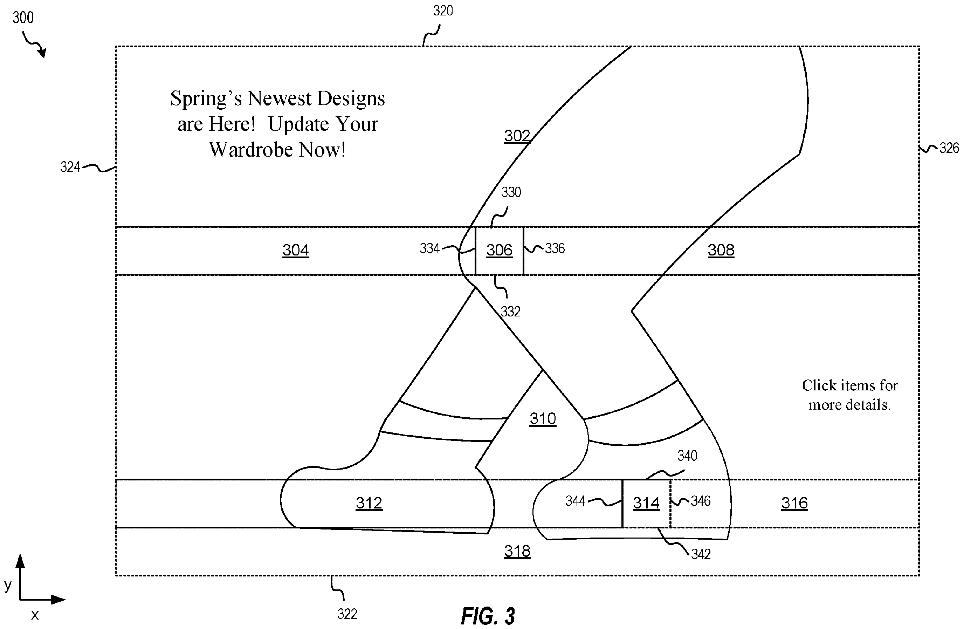

After obtaining the image 110 and the image information 120, the user device 102 may divide the image 110 into the multiple sub-images 128 based on the image information 120. For example, the image 110 may be segmented into multiple portions that form a respective sub-image of the sub-images 128. Each sub-image may include a portion of the image 110 that is less than the entirety of the image 110 and that does not overlap with any other of the sub-images 128. The image 110 may be divided into as many or more sub-images than there are interactive regions in the image 110. As a particular non-limiting example, if the image 110 includes three interactive regions that combine to span an entirety of the image 110, the image 110 may be divided into three sub-images. As another particular non-limiting example, if the image 110 includes two interactive regions (e.g., the interactive regions 112-114) that do not span an entirety of the image 110, the image 110 may be divided into more than two sub-images. An example of dividing an image into sub-images is further described herein with reference to FIG. 3. At least two of the sub-images 128 correspond to different interactive regions in the image 110 and are associated with different links. For example, one of the sub-images 128 may correspond to the first interactive region 112 and be associated with the first link 124, and another of the sub-images 128 may correspond to the second interactive region 114 and be associated with the second link 126. In this manner, the sub-images 128 may be associated with multiple different links.

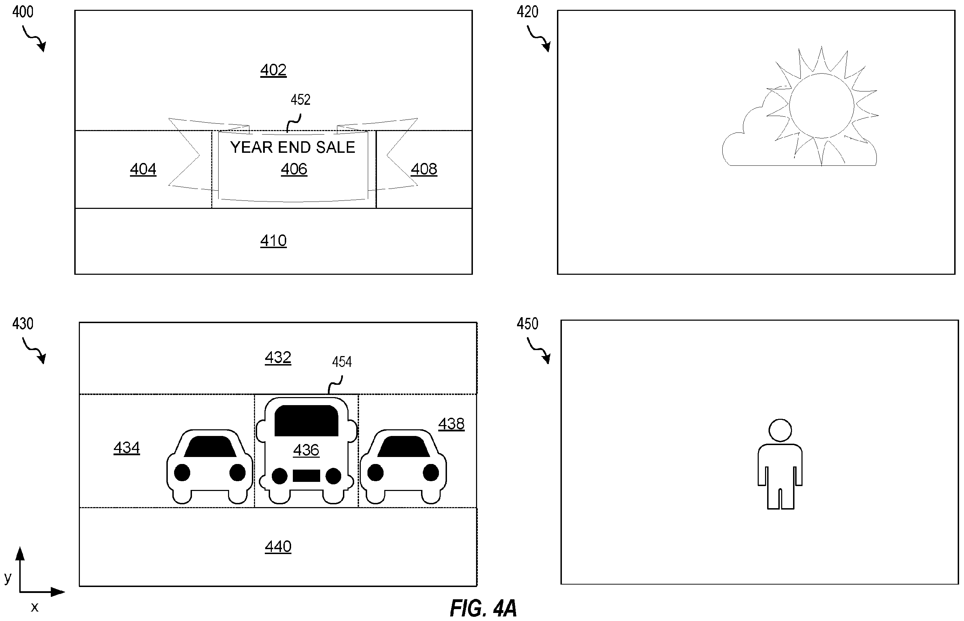

After dividing the image 110 into the sub-images 128, the user device 102 may output an e-mail message 170 based on the sub-images 128. For example, the e-mail application 132 may generate the e-mail message 170 based on user input, one or more preconfigured rules or settings, and the like, in addition to the sub-images 128. To illustrate, the e-mail message 170 may include a composite image 172 of the sub-images 128. The composite image 172 may correspond or be formed by positioning the sub-images 128 in a layout where multiple sub-images are in direct contact, such that the combination of the sub-images 128 (e.g., the composite image 172) is a copy of the image 110. Multiple regions in the composite image 172 may be selectable (e.g., interactive) to cause a browser to access different links associated with the different selectable regions. For example, a first selectable region in the composite image 172 (e.g., corresponding to a particular sub-image of the sub-images 128) may be associated with the first link 124. As another example, a second selectable region in the composite image 172 (e.g., corresponding to another particular sub-image of the sub-images 128) may be associated with the second link 126. The e-mail message 170 may include only a single image (e.g., the composite image 172 of the sub-images 128) and, optionally, other information such as text, e-mail addresses, other signatures, or the like. To further illustrate, the e-mail message 170 does not include multiple copies of the image 110, such as a respective copy of the image 110 for each interactive region included in the image 110. Although described as including a single image, in other example, the e-mail message 170 may include multiple individual images, such that each image is a different image meant to be displayed in a different location in the e-mail message 170 (e.g., a single instance of each of the multiple individual images). Alternatively, instead of receiving and dividing a single image into sub-images for use in generating the e-mail message 170, multiple images may be received and used to generate an e-mail message that includes a composite image, as further described herein with reference to FIGs. 4A-B. In some implementations, generating the e-mail message 170 may include generating hypertext markup language (HTML) code to enable display of the composite image 172 and support the linking functionality within the e-mail message 170. To illustrate, most e-mail applications are based on a subset of available HTML code and lack additional programming language support, such as support for Javascript, and the HTML code generated by the user device 102 using the available subset of HTML code. The HTML code included in the e-mail message 170 may include layout information associated with the composite image 172 (e.g., with the sub-images 128), links associated with two or more of the sub-images 128, other information, or a combination thereof, as further described with reference to FIG. 3.

Outputting the e-mail message 170 may include the user device 102 transmitting the e-mail message 170 (including the composite image 172 of the sub-images 128) to the network devices 150. For example, the user device 102 may provide the composite image 172 of the sub-images 128 to a content delivery network (CDN), and the CDN may serve the content (e.g., the sub-images 128) to the network devices 150. In some implementations, at least some of the sub-images 128 are transmitted by the user device 102, and/or received by the network devices 150, at least partially concurrently. For example a portion of a time period during which a first sub-image is received by the network devices 150 may overlap with a portion of a time period during which a second sub-image is received by the network devices 150. The network devices 150 may execute the e-mail application 152 to display the received e-mail message 170, such as at a display device integrated within or coupled to the network devices 150. Displaying the e-mail message 170 includes displaying the composite image 172. The network devices 150 may process the HTML code included in the e-mail message 170 to cause display of a single image (e.g., the composite image 172) after receipt of the sub-images 128. The composite image 172 may include at least two selectable regions that, when selected, cause the browser 154 to access corresponding links. For example, in response to user selection of the first selectable region, the browser 154 may access the first link 124. As another example, in response to user selection of the second selectable region in the composite image 172, the browser 154 may access the second link 126.

As described above, the system 100 supports generation of e-mail messages with multi-link composite images. For example, the e-mail message 170 may include the composite image 172 of the sub-images 128, some of which are associated with the first link 124 and the second link 126. In this manner, the e-mail message 170 may include a single image (i.e., the composite image 172) that includes multiple interactive regions, thereby improving the utility and customization of images included in e-mails. For example, selection of different portions of the composite image 172 at the network devices 150 may cause the browser 154 to access and display different links (e.g., the first link 124 or the second link 126), which enables different objects depicted in an image to be customized with different links. The improved customization of the e-mail message 170 of the composite image 172 is achieved without requiring multiple copies of images to be included in the e-mail message 170, such as an individual copy of an image for each interactive region within the image, which would increase a size of the e-mail message 170 and decrease throughput within the one or more networks 160 as compared to including smaller sub-images in the e-mail message 170. Thus, the system 100 enables modification of the conventional operation of e-mail communications in networks by enabling generation and transmission of e-mail messages that include multiple distinct interactive regions (associated with respective distinct links) in single images. Additionally, the system 100 and the techniques described above improve the operation of the network devices 150. To illustrate, because the sub-images 128 of the composite image 172 are received (and transmitted) at least partially concurrently, a receive and display time associated with the e-mail message 170 is reduced at the network devices 150 as compared to receiving an e-mail message that includes a single, non-divided image. For example, if the network devices 150 are able to receive each of the sub-images 128 concurrently, the receive and display time associated with the e-mail message 170 may be based on the receive time associated with the largest sub-image of the sub-images 128 instead of a receive time associated with the image 110. Because the largest sub-image is smaller in size than the image 110, the receive time associated with the largest sub-image is less than the receive time associated with the image 110, and thus the network devices 150 are able to reduce a receive and display time associated with the e-mail message 170.

Referring to FIG. 2, an example of an image with multiple interactive regions according to one or more aspects is shown as an image 200. In some implementations, the image 200 may include or correspond to the image 110 of FIG. 1. The image 200 may include a single image or an image generated by combining an image with one or more overlaid additional images or other visual elements, such as text, icons, buttons, shapes, or the like. In some implementations, the image 200 and any associated image information may be created using a web design application, such as the web design application 130 of FIG. 1.

The image 200 includes multiple interactive regions, such as a first interactive region 202 and a second interactive region 204. In some implementations, the interactive regions 202-204 may include or correspond to the interactive regions 112-114 of FIG. 1. The interactive regions 202-204 may include buttons, text (or text bounding boxes), hotspots (e.g., selectable regions indicated by graphics, animations, or other visual elements, or selectable regions that are not visually indicated), additional images overlaid on the image, or a combination thereof. For example, the first interactive region 202 and the second interactive regions 204 may include hotspots indicated by respective star graphics, as a non-limiting example. In some implementations, the first interactive region 202 may be the same type of interactive region as the second interactive region 204. In some other implementations, the first interactive region 202 and the second interactive region 204 may be different types of interactive regions, such as a button and a hotspot, respectively, as a non-limiting example. The interactive regions 202-204 may be selectable to a user, such as if the image 200 is part of a webpage, to cause a browser to access links associated with the selected interactive region (and optionally to perform other interactive functionality). For example, selection of the first interactive region 202 may cause the browser to access the first link 124 of FIG. 1, and selection of the second interactive region 204 may cause the browser to access the second link 126 of FIG. 1. The interactive regions 202-204 may be selected via an I/O device such as a keyboard, a mouse, a touchpad, or the like, or in other manners.

The image 200 may be associated with image information that includes layout information for the first interactive region 202 and the second interactive region 204. In some implementations, the image information may include or correspond to the image information 120 of FIG. 1. The layout information may indicate respective locations and dimensions of the first interactive region 202 and the second interactive region 204. For example, the layout information may include coordinates of a vertex of a bounding box of a respective interactive region (or another location associated with the interactive region, such as a center or other position) and two dimensions of the respective interactive region, such as a width and a height. In some implementations, the layout information is based on a two-dimensional coordinate grid applied to the image 200, such as an x-y coordinate grid with x representing a horizontal axis and y representing a vertical axis. For example, the layout information may indicate the (x, y) coordinates of an upper left vertex of a bounding box of a respective interactive region, a width (e.g., along the x-axis) of the bounding box, and a height (e.g., along the y-axis) of the respective bounding box. As a particular, non-limiting example, the layout information may include (30, 28), a width of two, and a height of two for the first interactive region 202, and (40, 10), a width of two, and a height of two for the second interactive region 204.

The interactive regions 202-204 may be associated with different links to support region-specific (e.g., item-specific) redirections. For example, the first interactive region 202 may be associated with the first link 124 of FIG. 1, and the second interactive region 204 may be associated with the second link 126 of FIG. 1. The links 124-126 may include uniform resource locators (URLs) or other forms of links that may be used to direct a browser to corresponding content. For example, the URLs may correspond to different web pages, different files available via a network or locally, other click-destinations, or the like. In some implementations, the interactive regions 202-204 may overlap and correspond to objects in the image 200. In the non-limiting example shown in FIG. 2, the image 200 includes a view from the waist down of a model wearing particular pants and particular shoes, the first interactive region 202 may at least partially overlap and correspond to the particular pants, and the second interactive region 204 may at least partially overlap and correspond to the particular shoes. The first link 124 may include a link to a webpage to that displays various pants available for purchase (including the particular pants shown in the image 200), and the second link 126 may include a link to a webpage that displays various shoes available for purchase (including the particular shoes shown in the image 200). Including multiple interactive regions corresponding to multiple links in a single image increases customization of the image and may result in a more satisfied user. To illustrate, instead of including a single interactive region with a single link to a webpage that includes pants and shoes that are available for purchase, which may be too difficult or inefficient for the user to search for desired items or which may include additional links to object-specific web pages, including multiple interactive regions in a single image enables the user to follow a single link to a more relevant, easier to search, web page. Including multiple interactive regions associated with different links in a single image supports greater customization of images and links, such that multiple item-specific interactive links can be provided for different items of a single image.

The image information associated with the image 200 may be generated by the web design application that is used to generate the image 200. For example, to enable user creation of the first interactive region 202, the web design application may include a graphic user interface (GUI) that displays user-configurable inputs (e.g., input boxes, buttons, selectable icons, and the like) for setting the location, the dimensions, and the link associated with the first interactive region 202. Additionally or alternatively, the GUI may enable the user to "drag and drop" an indicator (e.g., the star) corresponding to the first interactive region 202 to change a location, to change the size of the indicator to change the dimensions, or the like, via a I/O device. Similar user-configurable inputs and interaction may be provided for the second interactive region 204. Once the user has completed the design using the web application, generation of an e-mail including a composite image of multiple sub-images may be supported within the web design application without additional input. For example, the GUI may display a button or other selectable indicator that, upon selection, causes division of the image 200 and generation of an e-mail message, as further described with reference to FIG. 3. In some implementations, the web design application may combine all the elements of the design into a single image (e.g., the image 200) which, along with the associated image information, is used in the image dividing and e-mail generation process. Alternatively, an image and image information may be received via some other manner of input, and the image dividing and e-mail generation process may be performed by an e-mail application or otherwise separate from a web design application.

Referring to FIG. 3, an example of dividing the image 200 of FIG. 2 into multiple sub-images 300 according to one or more aspects is shown. The image 200 may be divided into the multiple sub-images 300 as part of a process of generating an e-mail message that includes a composite image of the sub-images 300, as further described above with reference to FIG. 1.

In the non-limiting example shown in FIG. 3, the sub-images 300 include a first sub-image 302, a second sub-image 304, a third sub-image 306, a fourth sub-image 308, a fifth sub-image 310, a sixth sub-image 312, a seventh sub-image 314, an eighth sub-image 316, and a ninth sub-image 318. The number of the sub-images 300 formed from the image 200 may be based on the number of interactive regions in the original image, as further described below. Although nine sub-images are shown in FIG. 3, in other examples, the sub-images 300 may include fewer than nine or more than nine sub-images.

The image 200 may be divided into the sub-images 300 according to an image dividing or segmenting process. In some implementations, the image dividing process may be performed according to a primary direction and a secondary direction, and the sub-images formed may be rectangular (or square). In the example shown in FIG. 3, the primary direction is vertical (e.g., along the y-axis) and the secondary direction is horizontal (e.g., along the x-axis), based on definition in HTML tables of rows, followed by columns. Alternatively, the primary direction may be horizontal (or another direction), and the secondary direction may be vertical (or another direction). Although the examples described herein are for rectangular sub-images, in other implementations, the sub-images 300 may have other shapes such that the sub-images 300 may be combined to form a composite image that matches the image 200 of FIG. 2. The image dividing process may divide an entirety of the image 200 into sub-images, such that an entirety of the area surrounded by borders of the image 200 is segmented into the sub-images 300.

The image dividing process may be performed with reference to the borders of the image 200, the borders of the first interactive region 202 (or a bounding box thereof), and the borders of the second interactive region 204 (or a bounding box thereof). The borders of the image 200 include a first border 320, a second border 322 that is opposite to the first border 320, a third border 324 that is adjacent to the first border 320, and a fourth border 326 that is opposite to the third border 324. The borders of the first interactive region 202 include a first border 330, a second border 332 that is opposite to the first border 330, a third border 334 that is adjacent to the first border 330, and a fourth border 336 that is opposite to the third border 334. The borders of the second interactive region 204 include a first border 340, a second border 342 that is opposite to the first border 340, a third border 344 that is adjacent to the first border 340, and a fourth border 346 that is opposite to the third border 344.

The image dividing process may begin by determining if the first border 330 of the first interactive region 202 overlaps the first border 320 of the image 200. If the first borders 320 and 330 do not overlap, the first sub-image 302 may be formed such that the first sub-image 302 extends in the primary direction from the first border 320 of the image 200 to the first border 330 of the first interactive region 202 and extends in the secondary direction from the third border 324 of the image 200 to the fourth border 326 of the image 200. If the first borders 320 and 330 overlap, no sub-image is formed at this stage. The image dividing process continues by determining if the first interactive region 202 and the second interactive region 204 overlap in a dimension corresponding to the primary direction. For example, it is determined if any y-coordinate included in the first interactive region 202 overlaps with any y-coordinate included in the second interactive region 204. If the interactive regions 202-204 do not overlap in this dimension, the second sub-image 304, the third sub-image 306, and the fourth sub-image 308 are formed having the same location in the primary direction and different locations in the secondary direction. To illustrate, the second sub-image 304 extends in the primary direction from the first border 330 of the first interactive region 202 to the second border 332 of the first interactive region 202 and extends in the secondary direction from the third border 324 of the image 200 to the third border 334 of the first interactive region 202. The third sub-image 306 extends in the primary direction from the first border 330 of the first interactive region 202 to the second border 332 of the first interactive region 202 and extends in the secondary direction from the third border 334 of the first interactive region 202 to the fourth border 336 of the first interactive region 202. The fourth sub-image 308 extends in the primary direction from the first border 330 of the first interactive region 202 to the second border 332 of the first interactive region 202 and extends in the secondary direction from the fourth border 336 of the first interactive region 202 to the fourth border 326 of the image 200.

If the interactive regions 202-204 overlap in the primary direction, the image 200 is divided to form three sub-images as described above for a portion of the image 200 between the first border 330 of the first interactive region 202 and the first border 340 of the second interactive region 204 in the primary direction. Additionally, a portion of the image 200 from the first border 340 of the second interactive region 204 to the second border 332 of the first interactive region 202 in the primary direction (e.g., the overlapping portion between the interactive regions 202-204) is divided into five sub-images with different locations in the secondary direction: from the third border 324 of the image 200 to the third border 334 of the first interactive region 202, from the third border 334 of the first interactive region 202 to the fourth border 336 of the first interactive region 202, from the fourth border 336 of the first interactive region 202 to the third border 344 of the second interactive region 204, from the third border 344 of the second interactive region 204 to the fourth border 346 of the second interactive region 204, and from the fourth border 346 of the second interactive region 204 to the fourth border 326 of the image 200. Additionally, a portion of the image 200 from the second border 332 of the first interactive region 202 to the second border 342 of the second interactive region 204 in the primary direction is divided into three sub-images as described above for the first interactive region 202. If more than two interactive regions overlap, the portion of the image 200 that includes the overlapping interactive regions is divided into more sub-images in a similar manner to as described above.

The image dividing process continues by determining if the second border 332 of the first interactive region 202 overlaps the first border 340 of the second interactive region 204. If the second border 332 and the first border 340 do not overlap, the fifth sub-image 310 may be formed such that the fifth sub-image 310 extends in the primary direction from the second border 332 of the first interactive region 202 to the first border 340 of the second interactive region 204 and extends in the secondary direction from the third border 324 of the image 200 to the fourth border 326 of the image 200. If the second border 332 and the first border 340 overlap, no additional sub-image is formed at this stage. The image dividing process continues by determining if the second interactive region 204 overlaps in primary direction with any other interactive region(s). If the second interactive region 204 does not overlap in the primary direction with any other interactive region(s), the sixth sub-image 312, the seventh sub-image 314, and the eighth sub-image 316 are formed having the same location in the primary direction and different locations in the secondary direction. To illustrate, the sixth sub-image 312 extends in the primary direction from the first border 340 of the second interactive region 204 to the second border 342 of the second interactive region 204 and extends in the secondary direction from the third border 324 of the image 200 to the third border 344 of the second interactive region 204. The seventh sub-image 314 extends in the primary direction from the first border 340 of the second interactive region 204 to the second border 342 of the second interactive region 204 and extends in the secondary direction from the third border 344 of the second interactive region 204 to the fourth border 346 of the second interactive region 204. The eighth sub-image 316 extends in the primary direction from the first border 340 of the second interactive region 204 to the second border 342 of the second interactive region 204 and extends in the secondary direction from the fourth border 346 of the second interactive region 204 to the fourth border 326 of the image 200. If the second interactive region 204 does not overlap in the primary direction with any other interactive region(s), the image 200 is divided into more than three sub-images, as described above. If the image 200 includes more than two interactive regions, the image dividing process repeats the previous two operations until all but a remaining portion of the image 200 is divided into sub-images.

The image dividing process continues by determining if the second border 342 of the second interactive region 204 (or a second border of a last interactive region if there are more than two interactive regions) overlaps the second border 322 of the image 200. If the second borders 342 and 322 do not overlap, the ninth sub-image 318 may be formed such that the ninth sub-image 318 extends in the primary direction from the second border 342 of the second interactive region 204 to the second border 322 of the image 200 (e.g., covering a remaining portion of the image 200) and extends in the secondary direction from the third border 324 of the image 200 to the fourth border 326 of the image 200. If the second borders 342 and 322 overlap, no additional sub-image is formed at this stage and the image dividing process ends.

Sub-images that correspond to interactive regions in the image 200 may be associated with respective links. For example, the third sub-image 306 may be associated with the first link 124 of FIG. 1 (that is associated with the first interactive region 202) and the seventh sub-image 314 may be associated with the second link 126 of FIG. 1 (that is associated with the second interactive region 204). Thus, at least two of the sub-images 300 may be associated with different links. Because the sub-images 300 are used to form a composite image that is included in an e-mail message, as described with reference to FIG. 1, supporting multiple sub-images that are associated with different links enables portion-specific (e.g., item-specific) multi-linking in a single image of an e-mail message.

In some implementations, an e-mail message may be generated that includes a composite image of the multiple sub-images 300. In some implementations, generating the e-mail message may include generating HTML code to indicate layout and links for each sub-image of the multiple sub-images 300. As a particular example, an HTML table may have multiple entries, each entry corresponding to one of the multiple sub-images 300 and including layout information (e.g., position and dimensions), related links, and other optional information associated with the respective sub-image. An illustrative example that corresponds to the multiple sub-images 300 shown in FIG. 3 is included in Table 1 below, where width_{img} is a width of the image 200, x₁ and y₁, are the x-coordinate and y-coordinate, respectively, of a particular vertex of the first interactive region 202, widthᵣ₁ and heightᵣ₁ are the width and height, respectively, of the first interactive region 202, x₃ and y₃, are the x-coordinate and y-coordinate, respectively, of a particular vertex of the second interactive region 204, and widthᵣ₂, and heightᵣ₂ are the width and height, respectively, of the second interactive region 204.

**Table 1**

| **Index** | **Position (x, y)** | **Dimensions (width, height)** | **Link** |
|---|---|---|---|
| 1 | (0, 0) | width_{img}, height₁ | |
| 2 | (0, y₁) | width₁, heightᵣ₁ | |
| 3 | (x₁, y₁) | widthᵣ₁, heightᵣ₁ | www.shoebuy.com |
| 4 | (x₂, y₁) | width2, heightᵣ₁ | |
| 5 | (0, y₂) | width_{img}, height₂ | |
| 6 | (0, y₃) | width₃, heightᵣ₂ | |
| 7 | (x₃, y₃) | widthᵣ₂, heightᵣ₂ | www.buyshirt.com |
| 8 | (x₄, y₃) | width₄, heightᵣ₂ | |
| 9 | (0, y₄) | width_{img}, height₃ | |

Referring to FIGs. 4A-B, examples of multiple images with multiple interactive regions and a composite image with multiple interactive regions for inclusion in an e-mail message according to one or more aspects are shown. In some implementations, the images and any associated image information may be created using a web design application, such as the web design application 130 of FIG. 1. Each of the multiple images may include a respective interactive region (or no interactive region) and may be provided, along with an e-mail message, to a device to enable the device to display a single composite image based on the multiple images within the e-mail message. In some implementations, some of the multiple images may be divided into sub-images before the sub-images and non-divided images are used to generate HTML code for inclusion in an e-mail message, as described above with reference to FIGs. 1 and 3.

FIG. 4A illustrates examples of four images: a first image 400, a second image 420, a third image 430, and a fourth image 450. Although four images are shown, in other implementations, fewer than four or more than four images may be used. Each of the images 400, 420, 430, and 450 may be sections of a larger whole image, or may be intended to be combined to form a single whole image even though the images are not part of a single whole image. In the example shown in FIG. 4A, the images 400, 420, 430, and 450 correspond to non-overlapping regions. In other implementations, one or more of the images 400, 420, 430, and 450 may correspond to at least partially overlapping regions, different layers of the same region, or the like. As described above with reference to FIGs. 1-3, the images 400, 420, 430, and 450 may be received with associated metadata that indicates one or more dimensions of the images 400, 420, 430, and 450 and layout information associated with interactive regions within the images 400, 420, 430, and 450.

Some of the images 400, 420, 430, and 450 may include an interactive region. For example, the first image 420 may include a first interactive region 452 and the third image 430 may include a second interactive region 454. In this example, the second image 420 and the fourth image 450 do not include interactive regions. The interactive regions 452-454 may include buttons, text (or text bounding boxes), hotspots (e.g., selectable regions indicated by graphics, animations, or other visual elements, or selectable regions that are not visually indicated), additional images overlaid on the image, or a combination thereof. For example, the first interactive region 452 may include a hotspot that corresponds to a banner in the first image 400 and the second interactive region 454 may include a hotspot that corresponds to a vehicle in the third image 430, as non-limiting examples. The first interactive region 452 and the second interactive region 454 may be the same or different types of interactive regions. The interactive regions 452-454 may be selectable to a user, such as if the images 400 and 430 are part of a webpage, to cause a browser to access links associated with the selected interactive region (and optionally to perform other interactive functionality). For example, selection of the first interactive region 452 may cause the browser to access a first link, and selection of the second interactive region 454 may cause the browser to access a second link.

The images 400, 420, 430, and 450 may be associated with respective image information. For example, image information associated with each of the images 400, 420, 430, and 450 may indicate characteristics such as a length and width of the respective image, an aspect ratio of the respective image, a resolution of the respective image, and the like. Image information associated with images that include interactive regions may include layout information for the interactive regions. For example, image information associated with the first image 400 may include layout information for the first interactive region 452 and image information associated with the third image 430 may include layout information for the second interactive region 454. The layout information may indicate respective locations and dimensions of the first interactive region 452 and the second interactive region 454. For example, the layout information may include coordinates of a vertex of a bounding box of a respective interactive region (or another location associated with the interactive region, such as a center or other position) with respect to the image that includes the interactive region and two dimensions of the respective interactive region, such as a width and a height. In some implementations, the layout information is based on a two-dimensional coordinate grid applied to the images 400, 420, 430, and 450, such as an x-y coordinate grid with x representing a horizontal axis and y representing a vertical axis. For example, the layout information may indicate the (x, y) coordinates of an upper left vertex of a bounding box of a respective interactive region with respect to the image, a width (e.g., along the x-axis) of the bounding box, and a height (e.g., along the y-axis) of the respective bounding box.

The interactive regions 452-454 may be associated with different links to support region-specific (e.g., item-specific) redirections. For example, the first interactive region 452 may be associated with a first link, and the second interactive region 454 may be associated with a second link. The links may include URLs or other forms of links that may be used to direct a browser to corresponding content. For example, the URLs may correspond to different web pages, different files available via a network or locally, other click-destinations, or the like. In the non-limiting example shown in FIG. 4A, the first image 400 includes a view of the sky above a car dealership, the first interactive region 452 may at least partially overlap and correspond to a banner in the sky, the second image 420 may include a view of the sky with the sun and clouds, the third image 430 may include a view of multiple vehicles at the car dealership, the second interactive region 454 may at least partially overlap and correspond to a particular vehicle, and the fourth image 450 may include a view of a customer at the car dealership. The first link may include a link to a webpage to that displays a landing page for the car dealership and the second link may include a link to a webpage that displays the particular car available for purchase. Including multiple interactive regions corresponding to multiple links in multiple images to be combined increases customization of a composite image generated based on the multiple images and may result in a more satisfied user. To illustrate, instead of including a single interactive region with a single link to a landing page for the car dealership, which may be too difficult or inefficient for the user to search for desired vehicles or which may include additional links to vehicle-specific web pages, including multiple interactive regions in a single image enables the user to follow a single link to a more relevant, easier to search, web page. Including multiple interactive regions associated with different links in a single image supports greater customization of images and links, such that multiple item-specific interactive links can be provided for different items of a single image.

To generate information and code to be included in an e-mail message, some of the images 400, 420, 430, and 450 may be sub-divided, and others may remain as received. For example, images that include interactive regions may be subdivided into sub-images, as described above with reference to FIG. 3. To illustrate, the first image 400 may be divided into a first sub-image 402, a second sub-image 404, a third sub-image 406, a fourth sub-image 408, and a fifth sub-image 410, and the third image 430 may be divided into a sixth sub-image 432, a seventh sub-image 434, an eighth sub-image 436, a ninth sub-image 438, and a tenth sub-image 440, in accordance with the techniques described above with reference to FIG. 3. The third sub-image 406 and the eighth sub-image 436 may correspond to the first interactive region 452 and the second interactive region 454, respectively. Although described as including interactive regions in the images 400, 420, 430, and 450, in other implementations, an entirety of one or more of the images 400, 420, 430, and 450 may correspond to an interactive region, such that no dividing of images is performed and instead the entirety of each received image is either associated with a respective link (e.g., represents an interactive region) or is not interactive. For example, instead of receiving an entirety of the first image 400, each of sub-images 402, 404, 406, 408, and 410 may be received, and instead of receiving the third image 430, each of sub-images 432, 434, 436, 438, and 440 may be received, where each sub-image represents an interactive region associated with a corresponding link or a non-interactive region.

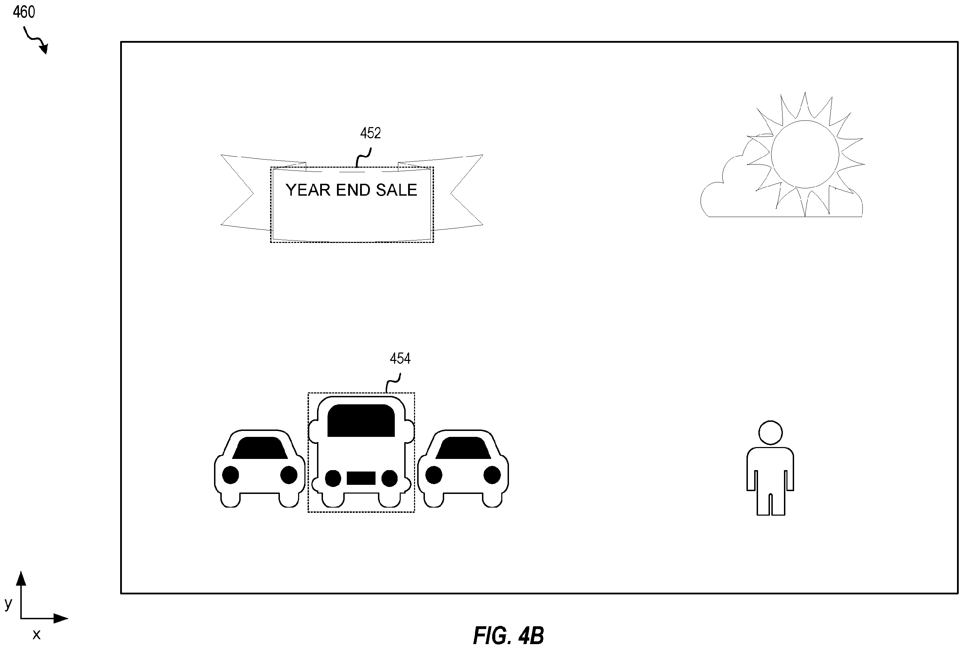

To generate an e-mail message that includes a composite image formed from the images 400, 420, 430, and 440, HTML code may be generated to indicate layout and links for each image (or sub-images) of the images 400, 420, 430, and 450. As a particular example, an HTML table may have multiple entries, each entry corresponding to an image or sub-image and including layout information (e.g., position and dimensions), related links, and other optional information associated with the respective sub-image. An illustrative example that corresponds to the example shown in FIG. 4A, an HTML table (or other form of metadata) may include an entry for each of the first sub-image 402, the second sub-image 404, the third sub-image 406, the fourth sub-image 408, the fifth sub-image 410, the second image 420, the sixth sub-image 432, the seventh sub-image 434, the eighth sub-image 436, the ninth sub-image 438, the tenth sub-image 440, and the fourth image 450. Each of the entries may include coordinates of a respective vertex of the image (or sub-image), a width of the image (or sub-image), a height of the image (or sub-image), and a link (e.g., a URL) associated with the image (or sub-image). For example, the entry associated with the third sub-image 406 may include a first URL that corresponds to the first interactive region 452 and the entry associated with the eighth sub-image 436 may include a second URL that corresponds to the second interactive region 454. A composite image 460 that is displayed in the e-mail message based on the metadata (e.g., HTML code) is shown in FIG. 4B. The composite image 460 (e.g., a single composite image) may include multiple interactive regions, such as the first interactive region 452 and the second interactive region 454, and be included in an e-mail message, similar to the composite images described above with reference to FIGs. 1-3.

Although implementations described above have included receiving image(s) and associated metadata with layout information for interactive regions, in other implementations, a system according to one or more aspects of the present disclosure may be configured to receive images that do not have metadata indicating layout information for interactive regions. In such implementations, the system may be configured to identify interactive regions in images (prior to dividing the images) using one or more computer vision techniques. To illustrate, the system may be configured to perform one or more computer vision operations on an image to be included in an e-mail message. The computer vision operations may include object detection, thresholding, edge detection, Kalman filtering, segmentation, binarization, and the like. For example, an interactive region may be indicated in an image by a border or other visual indication, and the system may perform edge detection, thresholding, or the like, to identify the border and thus the interactive region.

In some implementations, the computer vision operations may be performed based on one or more predefined rules. For example, the rules may establish thresholds or conditions for detection of edges, for comparisons of binary edges, for pixel selection or identification, for filtering, or the like. Additionally or alternatively, the computer vision operations may be performed using machine learning or artificial intelligence. For example, a neural network, or another type of machine learning model, may be trained to identify interactive regions in images using a training set of labeled images (e.g., images that are labeled as including an interactive region or not including an interactive region), and after training, input images may be provided to the neural network as input data to cause the neural network to output a prediction of whether the input images include interactive regions. Additionally or alternatively, a neural network or other type of machine learning model may be trained based on labeled images of objects to perform object detection on input images to identify particular types of objects associated with interactive regions, and based on detection of one or more objects, bounding boxes may be formed using computer vision and/or rule-based approaches to identify interactive regions. As illustrative examples, machine learning models may be trained to detect shirts and shoes in images associated with apparel retailers, cars in images associated with car dealerships, faces in images associated with on-line directories, or the like, and bounding boxes may be formed around the detected objects to identify interactive regions. If an image is predicted to include an interactive region, either based on the predefined rules or the machine learning model, the image may be divided into sub-images as described above. Although described as a neural network, in other implementations, other types of machine learning models or logic may be implemented, such as a support vector machine, a decision tree, a random forest, or the like.

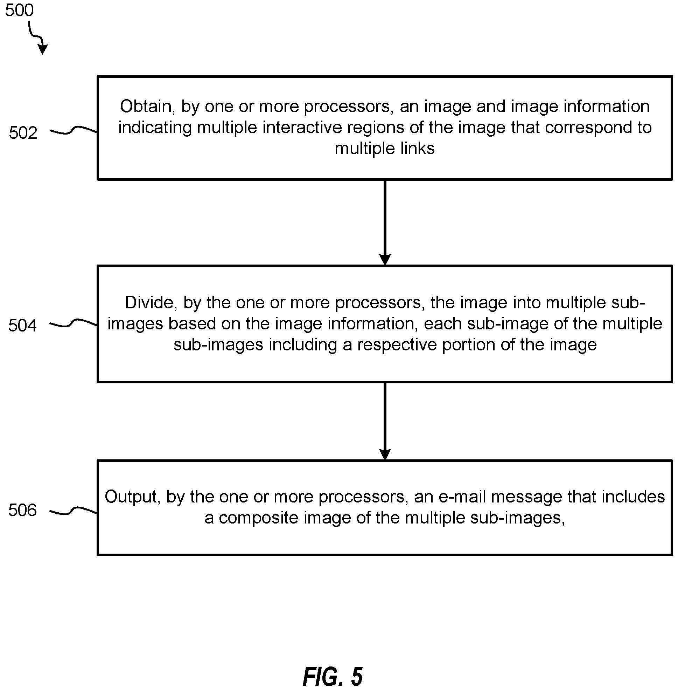

Referring to FIG. 5, a flow diagram of an example of a method for generating e-mail messages with multi-link composite images according to one or more aspects is shown as a method 500. In some implementations, the operations of the method 500 may be stored as instructions that, when executed by one or more processors (e.g., the one or more processors of a computing device or a server), cause the one or more processors to perform the operations of the method 500. In some implementations, the method 500 may be performed by a computing device, such as the user device 102 of FIG. 1.

The method 500 includes obtaining, by one or more processors, an image and image information indicating multiple interactive regions of the image that correspond to multiple links, at 502. The multiple interactive regions include a first interactive region corresponding to a first link of the multiple links and a second interactive region corresponding to a second link of the multiple links. For example, the image may include or correspond to the image 110 of FIG. 1, and the image information may include or correspond to the image information 120 of FIG. 1. The first interactive region may include or correspond to the first interactive region 112 of FIG. 1, and the second interactive region may include or correspond to the second interactive region 114 of FIG. 1. The first link may include or correspond to the first link 124 of FIG. 1, and the second link may include or correspond to the second link 126 of FIG. 1.

The method 500 includes dividing, by the one or more processors, the image into multiple sub-images based on the image information, at 504. Each sub-image of the multiple sub-images includes a respective portion of the image. For example, the multiple sub-images may include or correspond to the sub-images 128 of FIG. 1. The method 500 includes outputting, by the one or more processors, an e-mail message that includes a composite image of the multiple sub-images, at 506. A first region of the composite image is selectable within the e-mail message to cause a browser to access the first link, and a second region of the composite image is selectable within the e-mail message to cause the browser to access the second link. For example, the e-mail message may include or correspond to the e-mail message 170 of FIG. 1, and the composite image may include or correspond to the composite image 172 of FIG. 1.

In some implementations, each sub-image of the multiple sub-images may include less than an entirety of the image and does not overlap with any other sub-image of the multiple sub-images. For example, the sub-images may be divided as described with reference to FIG. 3. Additionally or alternatively, the image information may indicate, for each interactive region of the multiple interactive regions of the image, a location and dimensions of the interactive region. For example, the location and dimensions of the interactive regions may include or correspond to the layout information 122 of FIG. 1. In some such implementations, obtaining the image information may include receiving, by the one or more processors, the image and the image information from a web design application. For example, the web design application may include or correspond to the web design application 130 of FIG. 1.

In some implementations, the multiple interactive regions of the image may include buttons, text bounding areas, hotspots, additional images overlaid on the image, or a combination thereof. Additionally or alternatively, outputting the e-mail message may include generating, by the one or more processors, HTML code indicating a layout of each of the sub-images of the composite image and the multiple links that correspond to at least some of the multiple sub-images. For example, the HTML code may include or correspond to an HTML table similar to Table 1. Additionally or alternatively, dividing the image may include segmenting, by the one or more processors, the image into the multiple sub-images along a horizontal dimension of the image or a vertical dimension of the image. For example, an image may be divided into sub-images according to a primary direction and a secondary direction, as further described with reference to FIG. 3.

In some implementations, outputting the e-mail message may include initiating, by the one or more processors, transmission of the e-mail message and the multiple sub-images to a network device. At least some of the multiple sub-images are transmitted concurrently. For example, user device 102 of FIG. 1 may transmit the e-mail message 170 (including the composite image 172 of the sub-images 128) to the network devices 150. Additionally or alternatively, the e-mail message does not include multiple copies of the image. For example, the e-mail message 170 of FIG. 1 includes the composite image 172 and not a copy of the image 110.

In some implementations, one of the multiple sub-images may include at least a portion of a first object depicted in the composite image, and another of the multiple sub-images may include at least a portion of a second object depicted in the composite image. For example, the third sub-image 306 of FIG. 3 may include at least a portion of a first object (e.g., pants) in the image, and the seventh sub-image 314 of FIG. 3 may include at least a portion of a second object (e.g., shoes) in the image. In some such implementations, the first object may be associated with the first link, and the second object may be associated with the second link. For example, the first object may be associated with the first link 124 of FIG. 1, and the second object may be associated with the second link 126 of FIG. 1.

As described above, the method 500 supports generation of e-mail messages with multi-link composite images. For example, an e-mail message may be generated that includes a composite image of multiple sub-images, some of which are associated with individual links. In this manner, the e-mail message may include a single image (i.e., the composite image) that includes multiple interactive regions, thereby improving the utility and customization of images included in e-mails. The improved customization of the e-mail message with the composite image is achieved without requiring multiple copies of images to be included in e-mail messages, which would increase a size of the e-mail message and decrease throughput within a network. Thus, the method 500 enables modification of the conventional operation of e-mail communications in networks by enabling generation and transmission of e-mail messages that include multiple distinct interactive regions (associated with respective distinct links) in single images.

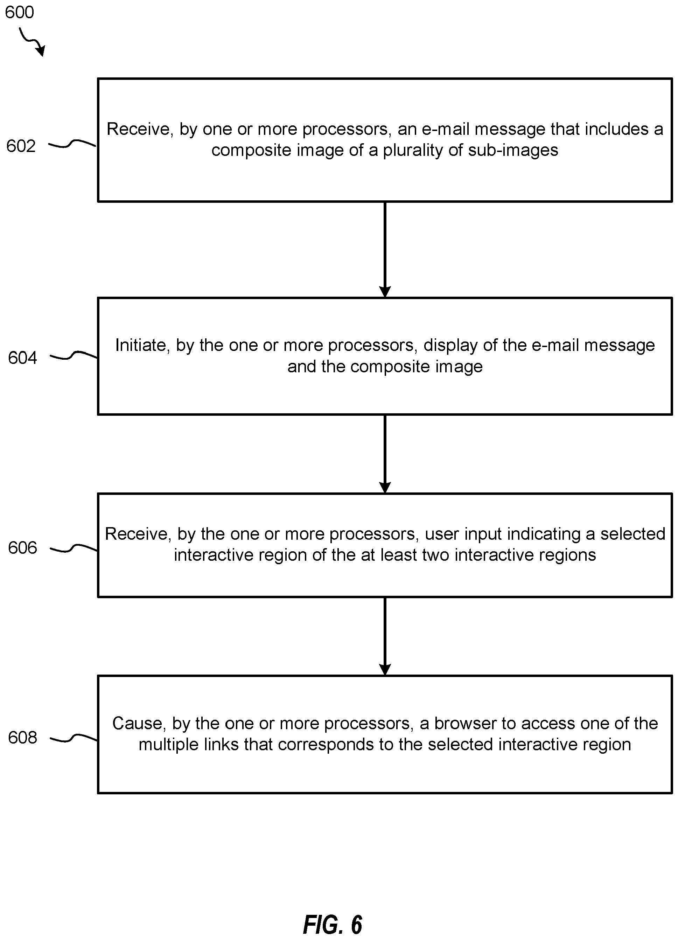

Referring to FIG. 6, a flow diagram of an example of a method for processing e-mail messages with multi-link composite images according to one or more aspects is shown as a method 600. In some implementations, the operations of the method 600 may be stored as instructions that, when executed by one or more processors (e.g., the one or more processors of a computing device or a server), cause the one or more processors to perform the operations of the method 600. In some implementations, the method 600 may be performed by a computing device, such as the network devices 150 of FIG. 1.

The method 600 includes receiving, by one or more processors, an e-mail message that includes a composite image of a plurality of sub-images, at 602. The plurality of sub-images include at least two sub-images that correspond to multiple links. For example, the e-mail message may include or correspond to the e-mail message 170 of FIG. 1, the composite image may include or correspond to the composite image 172 of FIG. 1, and the plurality of sub-images may include or correspond to the sub-images 128 of FIG. 1. The method 600 includes initiating, by the one or more processors, display of the e-mail message and the composite image, at 604. The composite image includes at least two interactive regions corresponding to the at least two sub-images. For example, the at least two interactive regions may correspond to the third sub-image 306 and the seventh sub-image 314 of FIG. 3.

The method 600 includes receiving, by the one or more processors, user input indicating a selected interactive region of the at least two interactive regions, at 606. For example, the network devices 150 of FIG. 1 may receive a user selection of a selected interactive region. The method 600 includes causing, by the one or more processors, a browser to access one of the multiple links that corresponds to the selected interactive region, at 608. For example, the browser may include or correspond to the browser 154 of FIG. 1, and the multiple links may include or correspond to the first link 124 and the second link 126 of FIG. 1.

In some implementations, the method 600 may further include concurrently receiving, by the one or more processors, at least some of the plurality of sub-images. For example, the network devices 150 of FIG. 1 may concurrently receive at least some of the sub-images 128 that make up the composite image 172 included in the e-mail message 170. Additionally or alternatively, the e-mail message may include HTML code indicating a layout of each of the sub-images of the composite image and the multiple links that correspond to the at least two sub-images. For example, the e-mail message 170 of FIG. 1 may include HTML code that includes an HTML table similar to Table 1.

As described above, the method 600 supports processing of e-mail messages with multi-link composite images. For example, an e-mail message that includes a composite image of multiple sub-images, some of which are associated with individual links, is received and displayed at a computing device. The method 600 may improve the operation of the computing device, because the multiple sub-images of the composite image are received (and transmitted) at least partially concurrently, and thus a receive and display time associated with the e-mail message is reduced as compared to receiving an e-mail message that includes a single, non-divided image. For example, if each of the multiple sub-images are received concurrently, the receive and display time associated with the e-mail message of the method 600 may be based on the receive time associated with the largest sub-image of the multiple sub-images instead of a receive time associated with the original, non-divided image. Because the largest sub-image is smaller in size than the original image, the receive time associated with the largest sub-image is less than the receive time associated with the original image, and thus a receive and display time associated with the e-mail message that includes the composite image of the multiple sub-images is reduced.

It is noted that the exemplary techniques described above provide processes for generating a composite image having at least one selectable region by dividing a target image(s) into sub-images and then incorporating the composite image within an e-mail, such description has been provided for purposes of illustration, rather than by way of limitation. In some aspects, the disclosed image processing techniques may be utilized to generate composite images for inclusion in e-mail messages by third parties. For example, an e-mail service provider may provide an e-mail service for distributing e-mails in connection with a campaign (e.g., an e-mail advertising campaign, etc.). As part of that service, the e-mail service provider may have a particular format or e-mail configuration that is used for e-mail messages transmitted via the e-mail service. The above-described functionality may be readily utilized to generate a set of sub-images and associate at least one interactive region with at least one of the sub-images. However, rather than generating and transmitting an e-mail message based on the composite image, the system (e.g., the system 100 of FIG. 1, such as user device 102) may generate the sub-images and HTML code for arranging the sub-images as a composite image within an e-mail and the sub-images and HTML code may be provided to an external system (e.g., a system of the e-mail service provider or a user of the e-mail service offered by the e-mail service provider) for use in generating e-mail messages for transmission to a target audience (e.g., intended recipients of the e-mail message including the composite image generated using the sub-images and HTML code).

In some aspects, the sub-images may be stored at a network accessible storage device by the system and the HTML code may include address information (e.g., uniform resource locators (URLs) or other information identifying the location where the sub-images may be obtained) corresponding to each sub-image. Including the address information corresponding to the sub-images in the HTML may enable the system to only provide the HTML code to the user (or e-mail service provider) system while still allowing the images to be retrieved by a recipient computing device. For example, a computing device associated with a recipient of an e-mail message generated from the provided HTML code may retrieve the sub-images using the address information included in the HTML code and present the composite image at the computing device of the recipient based on the retrieved sub-images. As described above, utilizing multiple sub-images may enable the media content of the e-mail message to be retrieved by the recipient computing device more quickly, enabling the composite image to be rendered rapidly at the recipient computing device. In additional or alternative aspects where the HTML code does not include address information, the HTML code may include a placeholder for address information, such as a string of text that includes the name of the corresponding sub-image (e.g., "IMG1"), the user or e-mail service provider may store the sub-images and update the HTML to include address information that enables the sub-images to be retrieved by the recipient computing device (e.g., by replacing the placeholders for each image with address information). It is noted that additional techniques may be utilized to ensure that the sub-images may be retrieved by the recipient computing device, such as retrieving the images using a server or API call to the e-mail server of the e-mail service provider or another technique.

Utilizing the above-described techniques allows the functionality of the system 100 of FIG. 1 to be leveraged as a service, enabling users or third party service providers to take advantage of the techniques disclosed herein to create interactive content suitable for transmission via e-mail messages, which have inherent technical limitations with respect to creation of interactive content, as described above. It is noted that different e-mail service providers may have different e-mail configurations or requirements. In such instances, information regarding those configurations or requirements may be known to the system generating the HTML code, which may ensure that the HTML code output by the system takes any service provider specific configuration or requirements into account and is compatible with the service provider's system. As a non-limiting example, the configuration of the e-mail service provider may include default cascading style sheets (CSS) that may impact the presentation of the interactive content associated with the provided HTML code. To prevent the default CSS from impacting the HTML code a style property may be configured in the provided HTML code (e.g., remove *table-layout: fixed* property). Other exemplary configuration parameters may also be accounted for in the provided HTML code, such as a call to action (CTA) block (e.g., replacing a default CTA block with a CTA block configured for the provided HTML code) or other parameters.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Components, the functional blocks, and the modules described herein with respect to FIGs. 1-6) include processors, electronics devices, hardware devices, electronics components, logical circuits, memories, software codes, firmware codes, among other examples, or any combination thereof. In addition, features discussed herein may be implemented via specialized processor circuitry, via executable instructions, or combinations thereof.

Those of skill would further appreciate that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure. Skilled artisans will also readily recognize that the order or combination of components, methods, or interactions that are described herein are merely examples and that the components, methods, or interactions of the various aspects of the present disclosure may be combined or performed in ways other than those illustrated and described herein.

The various illustrative logics, logical blocks, modules, circuits, and algorithm processes described in connection with the implementations disclosed herein may be implemented as electronic hardware, computer software, or combinations of both. The interchangeability of hardware and software has been described generally, in terms of functionality, and illustrated in the various illustrative components, blocks, modules, circuits and processes described above. Whether such functionality is implemented in hardware or software depends upon the particular application and design constraints imposed on the overall system.

The hardware and data processing apparatus used to implement the various illustrative logics, logical blocks, modules, and circuits described in connection with the aspects disclosed herein may be implemented or performed with a general purpose single- or multi-chip processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, or any conventional processor, controller, microcontroller, or state machine. In some implementations, a processor may also be implemented as a combination of computing devices, such as a combination of a DSP and a microprocessor, a plurality of microprocessors, one or more microprocessors in conjunction with a DSP core, or any other such configuration. In some implementations, particular processes and methods may be performed by circuitry that is specific to a given function.

In one or more aspects, the functions described may be implemented in hardware, digital electronic circuitry, computer software, firmware, including the structures disclosed in this specification and their structural equivalents thereof, or any combination thereof. Implementations of the subject matter described in this specification also may be implemented as one or more computer programs, that is one or more modules of computer program instructions, encoded on a computer storage media for execution by, or to control the operation of, data processing apparatus.

If implemented in software, the functions may be stored on or transmitted over as one or more instructions or code on a computer-readable medium. The processes of a method or algorithm disclosed herein may be implemented in a processor-executable software module which may reside on a computer-readable medium. Computer-readable media includes both computer storage media and communication media including any medium that may be enabled to transfer a computer program from one place to another. A storage media may be any available media that may be accessed by a computer. By way of example, and not limitation, such computer-readable media can include random-access memory (RAM), read-only memory (ROM), electrically erasable programmable read-only memory (EEPROM), CD-ROM or other optical disk storage, magnetic disk storage or other magnetic storage devices, or any other medium that may be used to store desired program code in the form of instructions or data structures and that may be accessed by a computer. Also, any connection may be properly termed a computer-readable medium. Disk and disc, as used herein, includes compact disc (CD), laser disc, optical disc, digital versatile disc (DVD), floppy disk, hard disk, solid state disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and instructions on a machine readable medium and computer-readable medium, which may be incorporated into a computer program product.

Various modifications to the implementations described in this disclosure may be readily apparent to those skilled in the art, and the generic principles defined herein may be applied to some other implementations without departing from the spirit or scope of this disclosure. Thus, the claims are not intended to be limited to the implementations shown herein, but are to be accorded the widest scope consistent with this disclosure, the principles and the novel features disclosed herein.

Additionally, a person having ordinary skill in the art will readily appreciate, the terms "upper" and "lower" are sometimes used for ease of describing the figures, and indicate relative positions corresponding to the orientation of the figure on a properly oriented page, and may not reflect the proper orientation of any device as implemented.

Certain features that are described in this specification in the context of separate implementations also may be implemented in combination in a single implementation. Conversely, various features that are described in the context of a single implementation also may be implemented in multiple implementations separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Further, the drawings may schematically depict one more example processes in the form of a flow diagram. However, other operations that are not depicted may be incorporated in the example processes that are schematically illustrated. For example, one or more additional operations may be performed before, after, simultaneously, or between any of the illustrated operations. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products. Additionally, some other implementations are within the scope of the following claims. In some cases, the actions recited in the claims may be performed in a different order and still achieve desirable results.

As used herein, including in the claims, various terminology is for the purpose of describing particular implementations only and is not intended to be limiting of implementations. For example, as used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). The term "coupled" is defined as connected, although not necessarily directly, and not necessarily mechanically; two items that are "coupled" may be unitary with each other. the term "or," when used in a list of two or more items, means that any one of the listed items may be employed by itself, or any combination of two or more of the listed items may be employed. For example, if a composition is described as containing components A, B, or C, the composition may contain A alone; B alone; C alone; A and B in combination; A and C in combination; B and C in combination; or A, B, and C in combination. Also, as used herein, including in the claims, "or" as used in a list of items prefaced by "at least one of' indicates a disjunctive list such that, for example, a list of "at least one of A, B, or C" means A or B or C or AB or AC or BC or ABC (that is A and B and C) or any of these in any combination thereof. The term "substantially" is defined as largely but not necessarily wholly what is specified - and includes what is specified; e.g., substantially 90 degrees includes 90 degrees and substantially parallel includes parallel - as understood by a person of ordinary skill in the art. In any disclosed aspect, the term "substantially" may be substituted with "within [a percentage] of' what is specified, where the percentage includes 0.1, 1, 5, and 10 percent; and the term "approximately" may be substituted with "within 10 percent of' what is specified. The phrase "and/or" means and or.

Although the aspects of the present disclosure and their advantages have been described in detail, it should be understood that various changes, substitutions and alterations can be made herein without departing from the spirit of the disclosure as defined by the appended claims. Moreover, the scope of the present application is not intended to be limited to the particular implementations of the process, machine, manufacture, composition of matter, means, methods and processes described in the specification. As one of ordinary skill in the art will readily appreciate from the present disclosure, processes, machines, manufacture, compositions of matter, means, methods, or operations, presently existing or later to be developed that perform substantially the same function or achieve substantially the same result as the corresponding aspects described herein may be utilized according to the present disclosure. Accordingly, the appended claims are intended to include within their scope such processes, machines, manufacture, compositions of matter, means, methods, or operations.

The following is a non-exhaustive list of embodiments of the invention which may or may not be claimed:
1. A method for generating electronic mail (e-mail) messages with multi-link composite images, the method comprising:
   obtaining, by one or more processors, an image and image information indicating multiple interactive regions of the image that correspond to multiple links, wherein the multiple interactive regions include a first interactive region corresponding to a first link of the multiple links and a second interactive region corresponding to a second link of the multiple links;
   dividing, by the one or more processors, the image into multiple sub-images based on the image information, each sub-image of the multiple sub-images including a respective portion of the image; and
   outputting, by the one or more processors, an e-mail message that includes a composite image of the multiple sub-images, wherein a first region of the composite image is selectable within the e-mail message to cause a browser to access the first link, and wherein a second region of the composite image is selectable within the e-mail message to cause the browser to access the second link.
2. The method of embodiment 1, wherein each sub-image of the multiple sub-images includes less than an entirety of the image and does not overlap with any other sub-image of the multiple sub-images.
3. The method of embodiment 1, wherein the image information indicates, for each interactive region of the multiple interactive regions of the image, a location and dimensions of the interactive region.
4. The method of embodiment 3, wherein obtaining the image information comprises receiving, by the one or more processors, the image and the image information from a web design application.
5. The method of embodiment 1, wherein the multiple interactive regions of the image comprise buttons, text bounding areas, hotspots, additional images overlaid on the image, or a combination thereof.
6. The method of embodiment 1, wherein outputting the e-mail message comprises generating, by the one or more processors, Hypertext Markup Language (HTML) code indicating a layout of each of the sub-images of the composite image and the multiple links that correspond to at least some of the multiple sub-images.
7. The method of embodiment 1, wherein dividing the image comprises segmenting, by the one or more processors, the image into the multiple sub-images along a horizontal dimension of the image or a vertical dimension of the image.
8. The method of embodiment 1, wherein outputting the e-mail message comprises initiating, by the one or more processors, transmission of the e-mail message and the multiple sub-images to a network device, wherein at least some of the multiple sub-images are transmitted concurrently.
9. The method of embodiment 1, wherein the e-mail message does not include multiple copies of the image.
10. The method of embodiment 1, wherein one of the multiple sub-images includes at least a portion of a first object depicted in the composite image, and wherein another of the multiple sub-images includes at least a portion of a second object depicted in the composite image.
11. The method of embodiment 10, wherein the first object is associated with the first link, and wherein the second object is associated with the second link.
12. A system for generating electronic mail (e-mail) messages with multi-link composite images, the system comprising:
   a memory; and
   one or more processors communicatively coupled to the memory, the one or more processors configured to:
      obtain an image and image information indicating multiple interactive regions of the image that correspond to multiple links, wherein the multiple interactive regions include a first interactive region corresponding to a first link of the multiple links and a second interactive region corresponding to a second link of the multiple links;
      divide the image into multiple sub-images based on the image information, each sub-image of the multiple sub-images including a respective portion of the image; and
      output an e-mail message that includes a composite image of the multiple sub-images, wherein a first region of the composite image is selectable within the e-mail message to cause a browser to access the first link, and wherein a second region of the composite image is selectable within the e-mail message to cause the browser to access the second link.
13. The system of embodiment 12, wherein the multiple sub-images comprise:
   a first sub-image extending, in a first direction, from a first border of the image to a first border of the first interactive region and, in a second direction, from a third border of the image that is adjacent to the first border of the image to a fourth border of the image that is opposite the third border of the image;
   a second sub-image extending, in the first direction, from the first border of the first interactive region to a second border of the first interactive region that is opposite the first border of the first interactive region and, in the second direction, from the third border of the image to a third border of the first interactive region;
   a third sub-image extending, in the first direction, from the first border of the first interactive region to the second border of the first interactive region and, in the second direction, from the third border of the first interactive region to a fourth border of the first interactive region that is opposite the third border of the first interactive region; and
   a fourth sub-image extending, in the first direction, from the first border of the first interactive region to the second border of the first interactive region and, in the second direction, from the fourth border of the first interactive region to a fourth border of the image that is opposite the third border of the image.
14. The system of embodiment 13, wherein the multiple sub-images further comprise:
   a fifth sub-image extending, in the first direction, from the second border of the first interactive region to a first border of the second interactive region and, in the second direction, from the third border of the image to the fourth border of the image;
   a sixth sub-image extending, in the first direction, from the first border of the second interactive region to a second border of the second interactive region that is opposite the first border of the second interactive region and, in the second direction, from the third border of the image to a third border of the second interactive region;
   a seventh sub-image extending, in the first direction, from the first border of the second interactive region to the second border of the second interactive region and, in the second direction, from the third border of the second interactive region to a fourth border of the second interactive region that is opposite the third border of the second interactive region;
   an eighth sub-image extending, in the first direction, from the first border of the second interactive region to the second border of the second interactive region and, in the second direction, from the fourth border of the second interactive region to the fourth border of the image; and
   a ninth sub-image extending, in the first direction, from the second border of the second interactive region to a second border of the image that is opposite the first border of the image and, in the second direction, from the third border of the image to the fourth border of the image.
15. The system of embodiment 14, wherein the third sub-image corresponds to the first link, and wherein the seventh sub-image corresponds to the second link.
16. The system of embodiment 15, wherein the one or more processors are configured to output the e-mail message by generating a Hypertext Markup Language (HTML) table having entries that correspond to the multiple sub-images, and wherein each entry of the HTML table indicates a location and dimensions of a respective sub-image.
17. The system of embodiment 16, wherein a first entry of the table indicates a location of the first sub-image of the composite image and dimensions of the first sub-image, wherein a second entry of the table indicates a location of the second sub-image of the composite image and dimensions of the second sub-image, and wherein a third entry of the table indicates a location of the third sub-image of the composite image, dimensions of the third sub-image, and the first link.
18. A method for processing electronic mail (e-mail) messages with multi-link composite images, the method comprising:
   receiving, by one or more processors, an e-mail message that includes a composite image of a plurality of sub-images, the plurality of sub-images including at least two sub-images that correspond to multiple links;
   initiating, by the one or more processors, display of the e-mail message and the composite image, the composite image including at least two interactive regions corresponding to the at least two sub-images;
   receiving, by the one or more processors, user input indicating a selected interactive region of the at least two interactive regions; and
   causing, by the one or more processors, a browser to access one of the multiple links that corresponds to the selected interactive region.
19. The method of embodiment 18, further comprising concurrently receiving, by the one or more processors, at least some of the plurality of sub-images.
20. The method of embodiment 18, wherein the e-mail message comprises Hypertext Markup Language (HTML) code indicating a layout of each of the sub-images of the composite image and the multiple links that correspond to the at least two sub-images.

## Claims

1. A method for generating electronic mail (e-mail) messages with multi-link composite images, the method comprising:
obtaining, by one or more processors, an image and image information indicating multiple interactive regions of the image that correspond to multiple links, wherein the multiple interactive regions include a first interactive region corresponding to a first link of the multiple links and a second interactive region corresponding to a second link of the multiple links;
dividing, by the one or more processors, the image into multiple sub-images based on the image information, each sub-image of the multiple sub-images including a respective portion of the image; and
outputting, by the one or more processors, an e-mail message that includes a composite image of the multiple sub-images, wherein a first region of the composite image is selectable within the e-mail message to cause a browser to access the first link, and wherein a second region of the composite image is selectable within the e-mail message to cause the browser to access the second link.

2. The method of claim 1, wherein each sub-image of the multiple sub-images includes less than an entirety of the image and does not overlap with any other sub-image of the multiple sub-images.

3. The method of claim 1 or claim 2, wherein the image information indicates, for each interactive region of the multiple interactive regions of the image, a location and dimensions of the interactive region.

4. The method of claim 3, wherein obtaining the image information comprises receiving, by the one or more processors, the image and the image information from a web design application.

5. The method of any preceding claim, wherein the multiple interactive regions of the image comprise buttons, text bounding areas, hotspots, additional images overlaid on the image, or a combination thereof.

6. The method of any preceding claim, wherein outputting the e-mail message comprises generating, by the one or more processors, Hypertext Markup Language (HTML) code indicating a layout of each of the sub-images of the composite image and the multiple links that correspond to at least some of the multiple sub-images.

7. The method of any preceding claim, wherein dividing the image comprises segmenting, by the one or more processors, the image into the multiple sub-images along a horizontal dimension of the image or a vertical dimension of the image.

8. The method of any preceding claim, wherein outputting the e-mail message comprises initiating, by the one or more processors, transmission of the e-mail message and the multiple sub-images to a network device, wherein at least some of the multiple sub-images are transmitted concurrently.

9. The method of any preceding claim, wherein the e-mail message does not include multiple copies of the image.

10. The method of any preceding claim, wherein one of the multiple sub-images includes at least a portion of a first object depicted in the composite image, and wherein another of the multiple sub-images includes at least a portion of a second object depicted in the composite image.

11. The method of claim 10, wherein the first object is associated with the first link, and wherein the second object is associated with the second link.

12. A system for generating electronic mail (e-mail) messages with multi-link composite images, the system comprising:
a memory; and
one or more processors communicatively coupled to the memory, the one or more processors configured to:
obtain an image and image information indicating multiple interactive regions of the image that correspond to multiple links, wherein the multiple interactive regions include a first interactive region corresponding to a first link of the multiple links and a second interactive region corresponding to a second link of the multiple links;
divide the image into multiple sub-images based on the image information, each sub-image of the multiple sub-images including a respective portion of the image; and
output an e-mail message that includes a composite image of the multiple sub-images, wherein a first region of the composite image is selectable within the e-mail message to cause a browser to access the first link, and wherein a second region of the composite image is selectable within the e-mail message to cause the browser to access the second link.

13. The system of claim 12, wherein the multiple sub-images comprise:
a first sub-image extending, in a first direction, from a first border of the image to a first border of the first interactive region and, in a second direction, from a third border of the image that is adjacent to the first border of the image to a fourth border of the image that is opposite the third border of the image;
a second sub-image extending, in the first direction, from the first border of the first interactive region to a second border of the first interactive region that is opposite the first border of the first interactive region and, in the second direction, from the third border of the image to a third border of the first interactive region;
a third sub-image extending, in the first direction, from the first border of the first interactive region to the second border of the first interactive region and, in the second direction, from the third border of the first interactive region to a fourth border of the first interactive region that is opposite the third border of the first interactive region, wherein the third sub-image corresponds to the first link; and
a fourth sub-image extending, in the first direction, from the first border of the first interactive region to the second border of the first interactive region and, in the second direction, from the fourth border of the first interactive region to a fourth border of the image that is opposite the third border of the image.

14. The system of claim 13, wherein the one or more processors are configured to output the e-mail message by generating a Hypertext Markup Language (HTML) table having entries that correspond to the multiple sub-images, and wherein each entry of the HTML table indicates a location and dimensions of a respective sub-image, wherein a first entry of the table indicates a location of the first sub-image of the composite image and dimensions of the first sub-image, wherein a second entry of the table indicates a location of the second sub-image of the composite image and dimensions of the second sub-image, and wherein a third entry of the table indicates a location of the third sub-image of the composite image, dimensions of the third sub-image, and the first link.

15. A method for processing electronic mail (e-mail) messages with multi-link composite images, the method comprising:
receiving, by one or more processors, an e-mail message that includes a composite image of a plurality of sub-images, the plurality of sub-images including at least two sub-images that correspond to multiple links;
initiating, by the one or more processors, display of the e-mail message and the composite image, the composite image including at least two interactive regions corresponding to the at least two sub-images;
receiving, by the one or more processors, user input indicating a selected interactive region of the at least two interactive regions; and
causing, by the one or more processors, a browser to access one of the multiple links that corresponds to the selected interactive region.
